(19) Europäisches Patentamt
European Patent Office
Office européen des brevets

(11) **EP 1 561 965 B1**

(12) **EUROPEAN PATENT SPECIFICATION**

(45) Date of publication and mention
of the grant of the patent:
**26.12.2007   Bulletin 2007/52**

(51) Int Cl.:
***F16G 11/00*** (2006.01)

(21) Application number: **05250677.1**

(22) Date of filing: **07.02.2005**

(54) **Stress redistributing cable termination**

Kabelende mit Spannungsumverteilung

Terminaison de câble redistribuant les contraintes

(84) Designated Contracting States:
**AT BE BG CH CY CZ DE DK EE ES FI FR GB GR
HU IE IS IT LI LT LU MC NL PL PT RO SE SI SK TR**

(30) Priority:   **06.02.2004   US 542500 P**

(43) Date of publication of application:
**10.08.2005   Bulletin 2005/32**

(73) Proprietor: **Bright Technologies LLC
Tallahassee, Florida 32309 (US)**

(72) Inventors:
  • **Barefield, Kevin
    Tallahassee, Florida 32309 (US)**

  • **Horton, John Wiley
    Tallahassee, Florida 32309 (US)**
  • **Campbell, Richard V.
    Tallahassee, Florida 32309 (US)**

(74) Representative: **JENSEN & SON
366-368 Old Street
London EC1V 9LT (GB)**

(56) References cited:
**DE-A1- 2 122 463        FR-A- 804 154
US-A- 3 153 268         US-A- 3 264 017
US-A- 5 525 003         US-A- 5 718 532
US-A1- 2005 173 147**

## Description

This invention relates to the field of cables and cable terminations. More specifically, the invention comprises a cable termination which redistributes stress in order to enhance the mechanical properties of the termination.

2. Description of the Related Art.

The individual components of a wire rope are generally referred to as "strands," whereas the individual components of natural-fiber cables or synthetic cables are generally referred to as "fibers." For purposes of this application, the term "strands" will be used generically to refer to both.

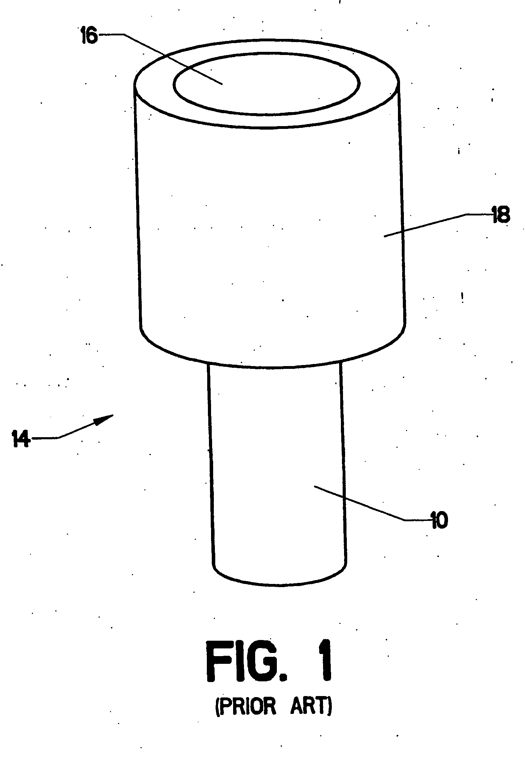

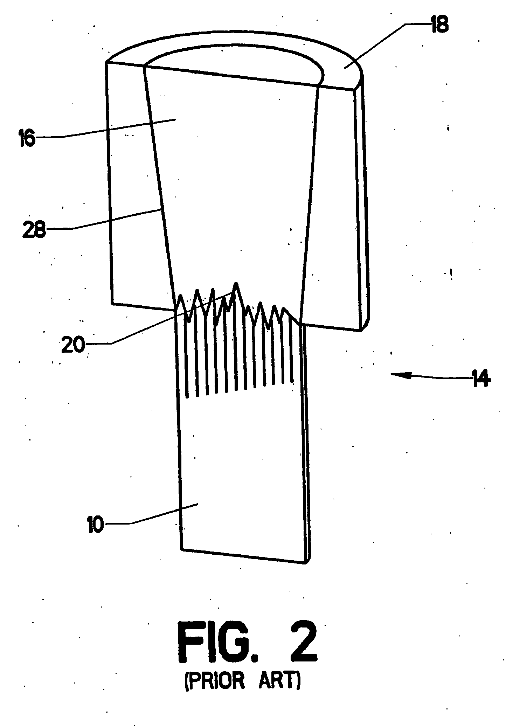

In order to carry a tensile load an appropriate connective device must be added to a cable. A connective device is typically added to an end of the cable, but may also be added at some intermediate point between the two ends. FIG. 1 shows a connective device which is well known in the art. FIG. 2 shows the same assembly sectioned in half to show its internal details. Anchor **18** includes tapered cavity **28** running through its mid portion. In order to affix anchor **18** to cable **10,** the strands proximate the end of cable **10** are exposed and placed within tapered cavity **28** (They may also be splayed or fanned to conform to the expanding shape of the tapered cavity).

Liquid potting compound is added to the region of strands lying within the anchor (either before or after the strands are placed within the anchor). This liquid potting compound solidifies while the strands are within the anchor to form potted region **16** as shown in FIG. 2. Most of potted region **16** consists of a composite structure of strands and solidified potting compound. Potting transition **20** is the boundary between the length of strands which is locked within the solidified potting compound and the freely-flexing length within the rest of the cable.

The unified assembly shown in FIGs. 1 and 2 is referred to as a "termination" (designated as **"14"** in the view). The mechanical fitting itself is referred to as an "anchor" (designated as **"18"** in the view). Thus, an anchor is affixed to a cable to form a termination. These terms will be used consistently throughout this disclosure.

Cables such as the one shown in FIG. 2 are used to carry tensile loads. When a tensile load is placed on the cable, this load must be transmitted to the anchor, and then from the anchor to whatever component the cable attaches to (typically through a thread, flange, or other fastening feature found on the anchor). As an example, if the cable is used in a winch, the anchor might include a large hook.

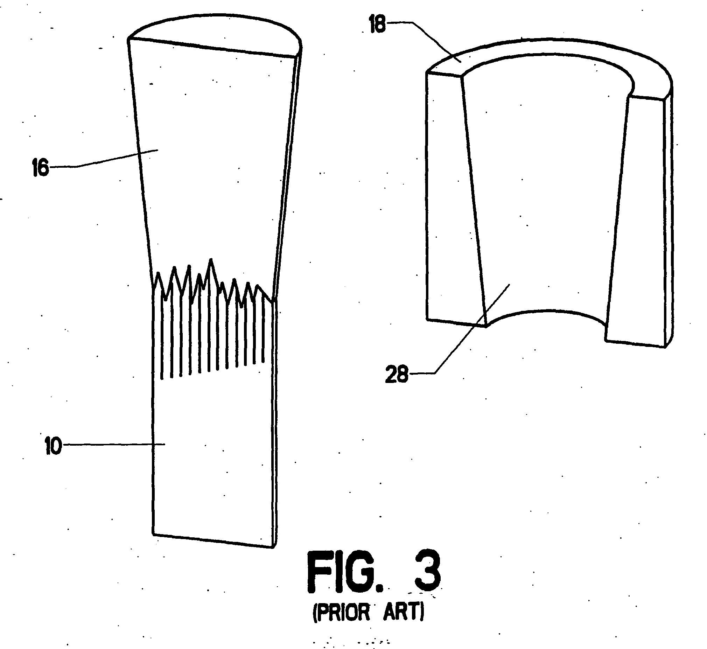

Those skilled in the art will realize that potted region 16 is locked within anchor **18** by the shape of tapered cavity **28.** FIG. 3 is a sectional view showing the potted region removed from the anchor. As shown in FIG. 3, tapered cavity **28** molds the shape of potted region **16** so that a mechanical interference is created between the two conical surfaces. When the potted region first solidifies, a surface bond is often created between the potted region and the wall of the tapered cavity. When the cable is first loaded, the potted region is pulled downward (with respect to the orientation shown in the view) within the tapered cavity. This action is often referred to as "seating" the potted region. The surface bond typically fractures. Potted region **16** is then retained within tapered cavity **28** solely by the mechanical interference of the mating male and female conical surfaces.

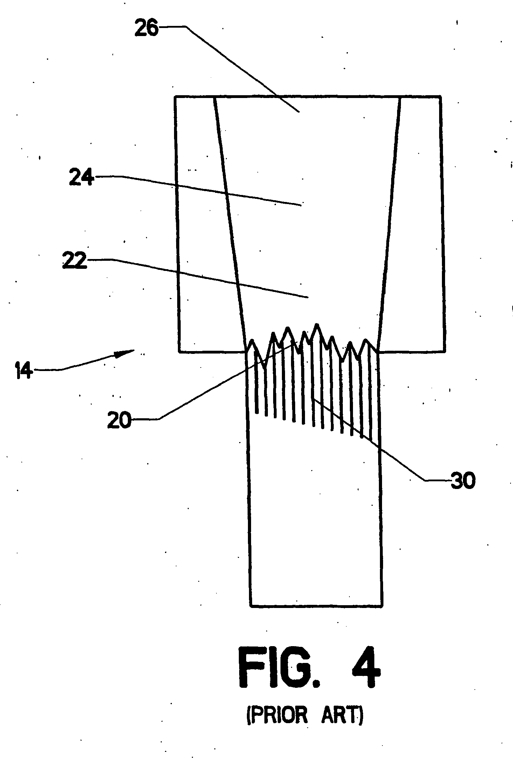

FIG. 4 shows the assembly of FIG. 3 in an elevation view. As mentioned previously, the seating process places considerable shearing stress on the surface bond, which often breaks. Further downward movement is arrested by the compressive forces exerted on the potted region by the tapered cavity (Spatial terms such as "downward" "upper", and "mid" are used throughout this disclosure. These terms are to be understood with respect to the orientations shown in the views. The assemblies shown can be used in any orientation. Thus, if a cable assembly is used in an inverted position, what was described as the "upper region" herein may be the lowest portion of the assembly). The compressive stress on potted region **16** tends to be maximized in neck region **22.** Flexural stresses tend to be maximized in this region as well, since it is the transition between the freely flexing and rigidly locked regions of the strands.

The tensile stresses within potted region **16** likewise tend to be maximized in neck region **22,** since it represents the minimum cross-sectional area. Thus, it is typical for terminations such as shown in FIGs. 1-4 to fail within neck region **22.**

In FIG. 4, potted region **16** is divided generally into neck region **22,** mid region **24,** and distal region **26.** Potting transition **20** denotes the interface between the relatively rigid potted region **16** and the relatively freely flexing flexible region **30.** Stress is generally highest in neck region **22,** lower in mid region **24,** and lowest in distal region **26.** A simple stress analysis explains this phenomenon.

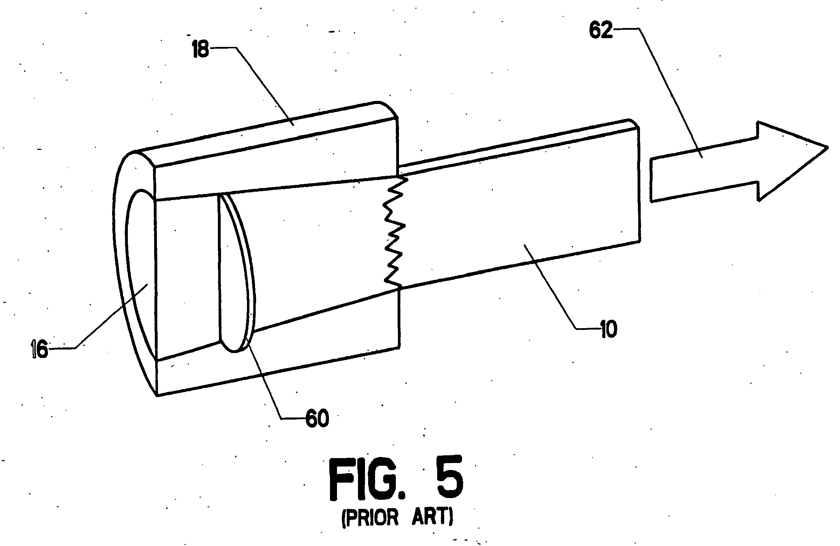

Considering the stress placed on a thin transverse "slice" within the potted region is helpful. FIG. 5 shows thin section **60** within potted region **16.** The potted region is held within a corresponding tapered cavity in an anchor. Seating force **62** pulls the potted region to the right in the view, thereby compressing the potted region.

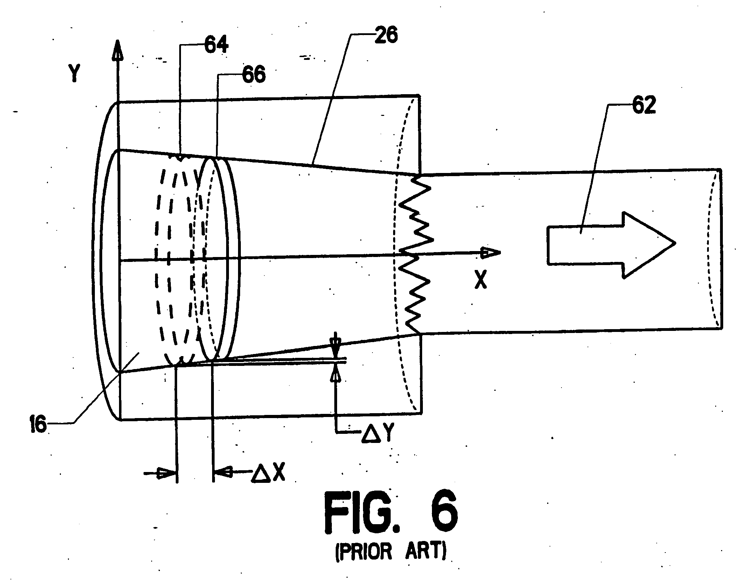

FIG. 6 graphically illustrates the seating phenomenon. A coordinate system is established for reference. The X Axis runs along the center axis of anchor **18.** Its point of origin lies on the anchor's distal extreme (distal to the neck region). The Y Axis is perpendicular to the X Axis. Its point of origin is the same as for the X Axis.

The thin section starts at unseated position **64.** However, once seating force **62** is applied, the thin section moves to the right to seated position **66.** The section moves through a distance $\Delta X$. Significantly, the thin section is transversely compressed a distance $\Delta Y$. It must be compressed since the wall of tapered cavity **28** slopes inward as the thin section moves toward the neck region. The reader should note that the seating movement is exaggerated in the view for visual clarity.

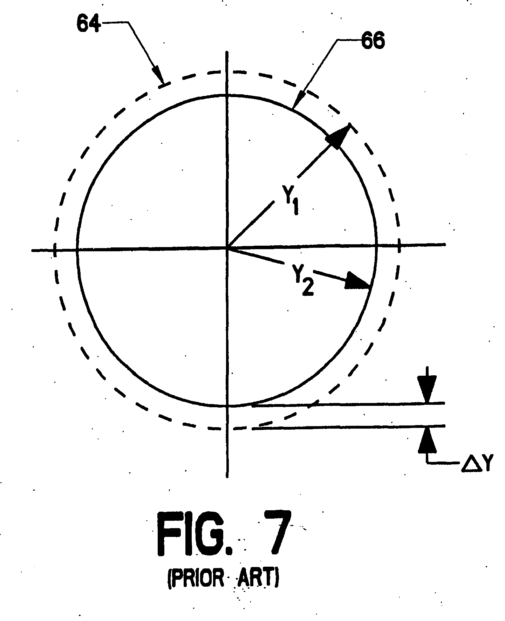

FIG. 7 shows a plan view of the thin section. Unseated position **64** is shown in dashed lines. Seated position **66** is shown as solid. The thin section actually has a conical side wall (matching the slope of tapered cavity **28** within anchor **18).** However, for a thin section this side wall can be approximated as a perpendicular wall without the introduction of significant error. With this assumption, the thin section becomes a very short cylinder, having a volume *of* $\pi \cdot r^2 h,$ with $h$ being the thickness of the section (or, in other words, the height of the very short cylinder).

In FIG. 7, $Y_1$ is the radius of the thin section in unseated position 64, while $Y_2$ is the radius of the thin section in seated position **66.** The volume of the section in the unseated position is $\pi \cdot Y_1^2 \cdot h$, while the volume of the seated position is $\pi \cdot Y_2^2 \cdot h$. A simple expression for compressive strain based on volume reduction is as follows:

$$\varepsilon = \frac{(\pi \cdot Y_1^2 - \pi \cdot Y_2^2) \cdot h}{\pi \cdot Y_1^2 \cdot h} = 1 - \frac{Y_2^2}{Y_1^2}$$

The hoop stress occurring within the thin section is linearly proportional to the compressive hoop strain (or very nearly so). Thus, the hoop stress in the thin section can be expressed as:

$$\sigma_{hoop} \approx k_1 \cdot (1 - \frac{Y_2^2}{Y_1^2}),$$

where $k_1$ is a scalar.

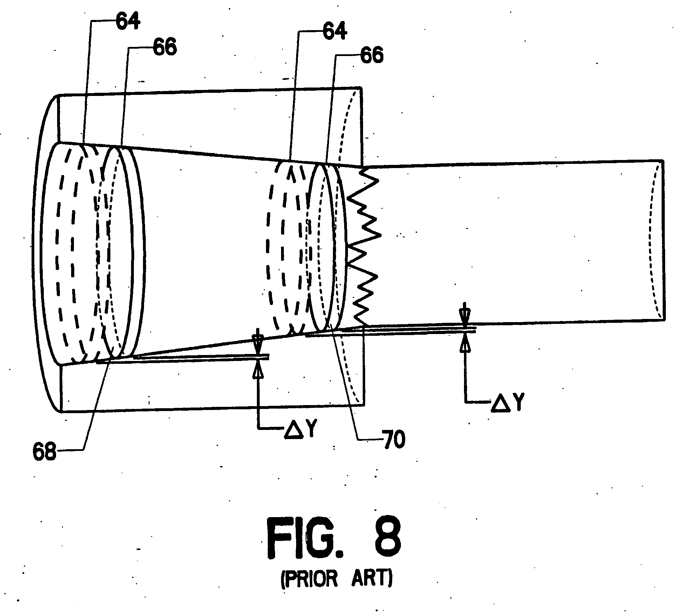

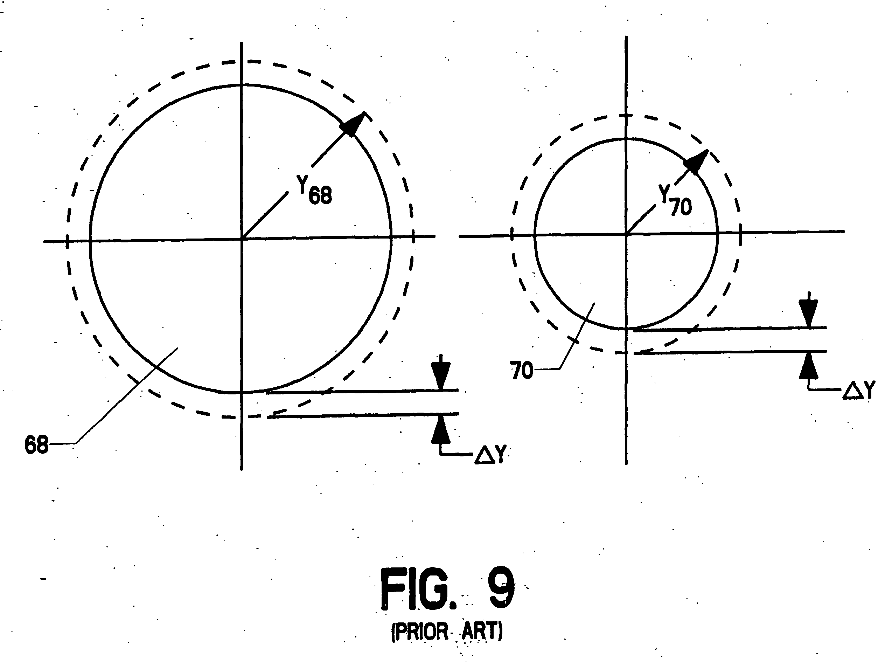

Consider now the situation depicted graphically in FIGs. 8 and 9. The same anchor is used. The same tapered cavity having a straight side wall is used. In this analysis, however, two separate thin sections will be considered. Distal thin section **68** lies distal to the potting transition in the region of the neck. Neck thin section **70** lies within the neck region proximate the potting transition. If tension is placed on the cable while the anchor is held in place, the potted region will "seat" by shifting to the right in the view. Each of the thin sections therefore has an unseated position **64** (shown in dashed lines) and a seated position **66** (shown in solid lines).

FIG. 9 shows a plan view of distal thin section **68** and neck thin section **70.** Again, the unseated position for both is shown in dashed lines while the seated positions are shown in solid lines. Because of the straight side wall within the anchor, the radius of both thin sections is reduced an amount $\Delta Y$. However, the reduction in area of the two sections will not be the same. The reader will recall from the prior expression that the hoop strain may be expressed as:

$$\varepsilon = 1 - \frac{Y_2^2}{Y_1^2}$$

Applying this equation to the two sections shown in FIG. 9, one may easily see that the smaller section (neck thin section **70)** undergoes a greater strain than does the larger section (distal thin section **68),** for a given amount of seating. A quick analysis using actual numbers makes this point more clear. Assume that the radius of neck thin section **70** in the unseated position is .250, while the unseated radius of distal thin section **68** is .350. Further assume that the seating movement produces a $\Delta Y$ of .020. The strain for neck thin section **70** would be

$$1 - \frac{.23^2}{.25^2} = .1536 .$$

The strain for distal thin section **68** would be

$$1 - \frac{33^2}{35^2} = .1110$$

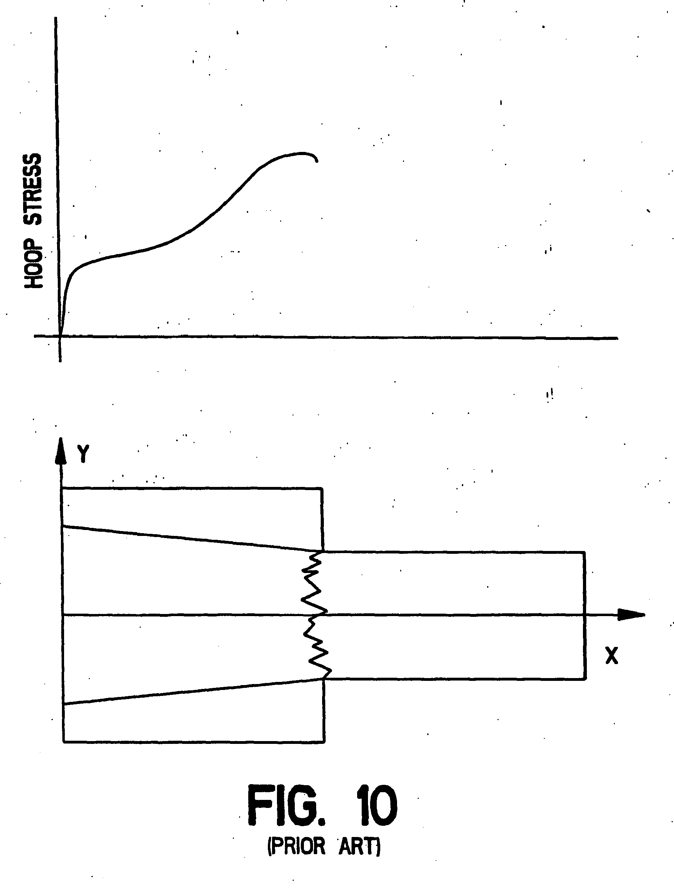

Thus, for a given amount of seating, the hoop strain increases when proceeding from the distal region to the neck region. Since the hoop stress is approximately linearly proportional to the hoop strain, the hoop stress is likewise increasing. FIG. 10 shows a representative plot of hoop stress plotted against position along the X Axis (the centerline of the cavity within the anchor). The reader will observe the stress concentration in the neck region. This stress concentration is undesirable, and represents a limitation of the prior art design. Thus, a goal of the present invention is to redistribute stress from the neck region to the mid and distal regions.

BRIEF SUMMARY OF THE PRESENT INVENTION

The present invention comprises a cable termination which redistributes stress. The termination includes an anchor having a neck region, a mid region, and a distal region. An expanding passage through the anchor from the neck region to the distal region is bounded by an internal surface. Exposed strands on a cable are trapped within this expanding passage by infusing them with liquid potting compound (either before or after the strands are placed within the passage). This liquid potting compound solidifies while the strands are within the anchor to form a solidified potted region.

When the cable is placed in tension, the forces generated are passed from the potted region to the internal surface of the expanding passage and from thence to the anchor. The shape of the internal surface influences the nature of this force transmission, thereby influencing the distribution of stress within the potted region itself. DE 2122463 discloses an anchor having a profile generated in accordance with a single curve formula. The present invention optimizes the profile of the internal surface in order to transfer stress occurring in the neck region to the mid region and the distal region. By transferring some of this stress, a more uniform stress distribution and a lower peak stress are achieved.

According to the present invention there is provided an anchor for use in creating a termination on a cable, comprising:

a. a neck anchor boundary;
b. a distal anchor boundary;
c. a central axis;
d. a passage extending along said central axis from said neck anchor boundary to said distal anchor boundary;
e. wherein said passage is defined by a revolved wall profile;
f. wherein said wall profile is created by adding a first set of radius values produced by a first curve and a second set of radius values produced by a second curve to form a third set of radius values defining a composite curve;
g. wherein at each point along said central axis said composite curve has a slope, with a positive slope being defined as one which causes said passage to expand when proceeding in the direction from said neck anchor boundary to said distal anchor boundary;
h. wherein said first curve is an area ratio function having a positive slope proximate said neck anchor boundary and having an increasingly positive slope proceeding toward said distal anchor boundary;
i. wherein said second curve is a tensile stress modifier curve having a negative slope proximate said neck anchor boundary and having a negative slope for substantially all its length; and
j. wherein parameters defining said area ratio function and said tensile stress modifier curve are such that at said neck anchor boundary said radius of said composite curve is approximately equal to the radius of said cable and said slope of said composite curve is approximately zero.

Embodiments of the present invention includes logarithmic curves, natural logarithmic curves, third order curves, and higher order curves used to generate an optimized profile.

The invention will now be described, by way of example, with reference to the accompanying drawings in which:-

FIG. 1 is a perspective view, showing a prior art termination.
FIG. 2 is a sectioned perspective view, showing internal features of a prior art termination.
FIG. 3 is a sectioned perspective view, showing internal features of a prior art termination.
FIG. 4 is a sectioned elevation view, showing internal features of a prior art termination.
FIG. 5 is a perspective view, showing an analysis of stresses within the potted region.
FIG. 6 is a perspective view, showing an analysis of stresses within the potted region.
FIG. 7 is an elevation view, showing the compression of a thin cross section.
FIG. 8 is a sectioned perspective view, showing an analysis of stresses within the potted region.

FIG. 9 is an elevation view, showing a comparison of compression within two thin cross sections.

FIG. 10 is a plot view, showing the distribution of hoop stress within the potted region. FIG. 11 is a plot view, showing the desired theoretical distribution of hoop stress within the potted region.

FIG. 12 is a schematic view, showing a progression of circular cross sections used to optimize a wall profile for hoop stress distribution.

FIG. 13 is a schematic view, showing three successive circular cross sections used to optimize a wall profile for hoop stress distribution.

FIG. 14 is a schematic view, showing an optimized wall profile.

FIG. 15 is a sectioned perspective view, showing an anchor having an optimized wall profile.

FIG. 16 is a plot view, showing an attempt to approximate the optimized wall profile using a second order curve.

FIG. 17 is a plot view, showing an attempt to approximate the optimized wall profile using a simple arc.

FIG. 17B is a plot view, showing the use of a third order curve to approximate the area ratio function.

FIG. 18 is a plot view, showing tensile stress distribution within the potted region.

FIG. 19 is a perspective view, showing an analytical element within the potted region.

FIG. 20 is a perspective view, showing the analytical element of FIG. 19 in a triaxial stress state.

FIG. 20B is a plot view, showing the distribution of hoop stress and tensile stress.

FIG. 21 is a plot view, showing the combination of a hoop stress optimized curve and a tensile stress modifier curve to create a composite curve.

FIG. 22 is a plot view, showing the addition of manufacturing boundaries to the composite curve.

FIG. 23 is a sectioned perspective view, showing an anchor having a wall profile defined by the composite curve.

FIG. 24 is a sectioned elevation view; showing how the cable's strands lie within the expanding passage.

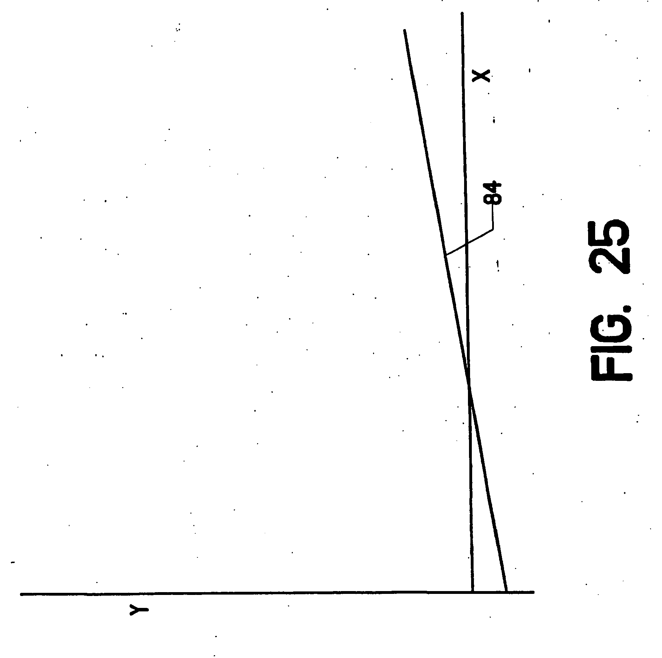

FIG. 25 is a plot view, showing a linear tensile stress modifier curve.

FIG. 26 is a plot view, showing a non-linear tensile stress modifier curve.

REFERENCE NUMERALS IN THE DRAWINGS

| 10 | cable | 14 | termination |
|---|---|---|---|
| 16 | potted region | 18 | anchor |
| 20 | potting transition | 22 | neck region |
| 24 | mid region | 26 | distal region |
| 28 | tapered cavity | 30 | flexible region |
| 32 | shoulder | 34 | serration |
| 36 | semicircular recess | 38 | straight portion |
| 40 | undulation | 42 | increased taper ledge |
| 44 | protrusion | 46 | recess |
| 48 | threaded portion | 50 | ring recess |
| 52 | step | 54 | gap |
| 56 | cross pin | 58 | through hole |
| 60 | thin section | 62 | seating force |
| 64 | unseated position | 66 | seated position |
| 68 | distal thin section | 70 | neck thin section |
| 72 | optimized profile | 74 | hoop stress optimized curve |
| 76 | hoop stress optimized anchor | 78 | parabolic approximation |
| 80 | constant radius curve | 82 | analysis element |
| 84 | tensile stress modifier curve | 86 | composite curve |
| 88 | diameter boundary | 90 | fillet |
| 92 | stress optimized anchor | 94 | splayed strands |
| 96 | distal anchor boundary | 98 | neck anchor boundary |
| 100 | dome shape | 102 | third order curve |
| 104 | parabolic curve | 106 | straight neck portion |
| 108 | tangency point | 110 | straight conic portion |
| 112 | higher order composite curve | 114 | first parabolic curve |
| 116 | second parabolic curve | 118 | first arc |

(continued)

120     second arc

## DETAILED DESCRIPTION OF THE INVENTION

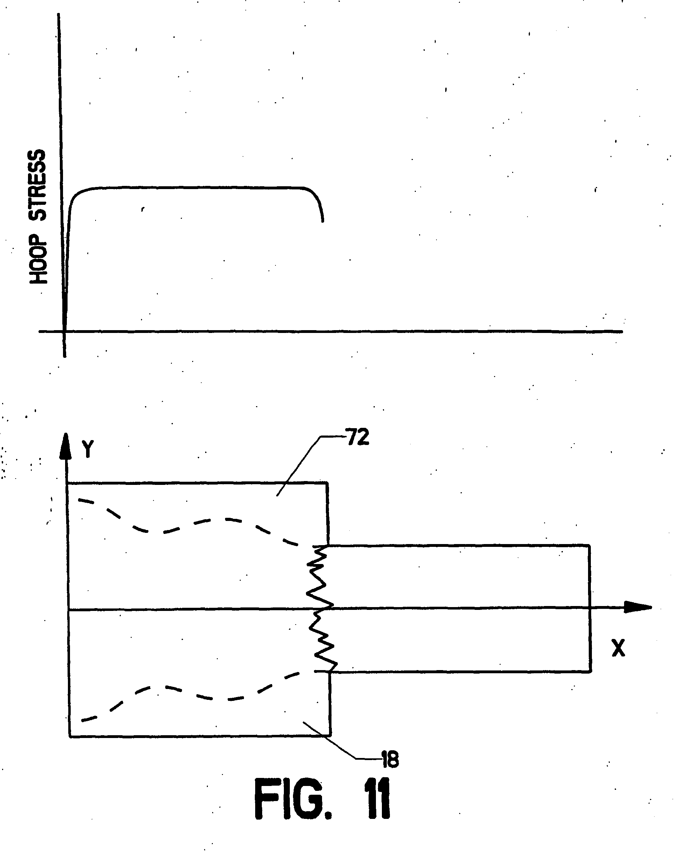

FIG. 11 graphically depicts one objective of the present invention. Anchor **18** includes an internal passage bounded by an internal surface. The internal surface is created by a revolved profile. Optimized profile **72 -** represented by the dashed lines in the lower view - is an undefined shape which will create an ideally uniform stress distribution for the potted region. This idealized stress distribution is shown in the upper view of FIG. 11. The optimized profile represents the shape which will most closely approximate the ideal uniform stress distribution. In reality, a completely flat stress curve is not possible. Thus, this diagram represents a goal rather than an expected result.

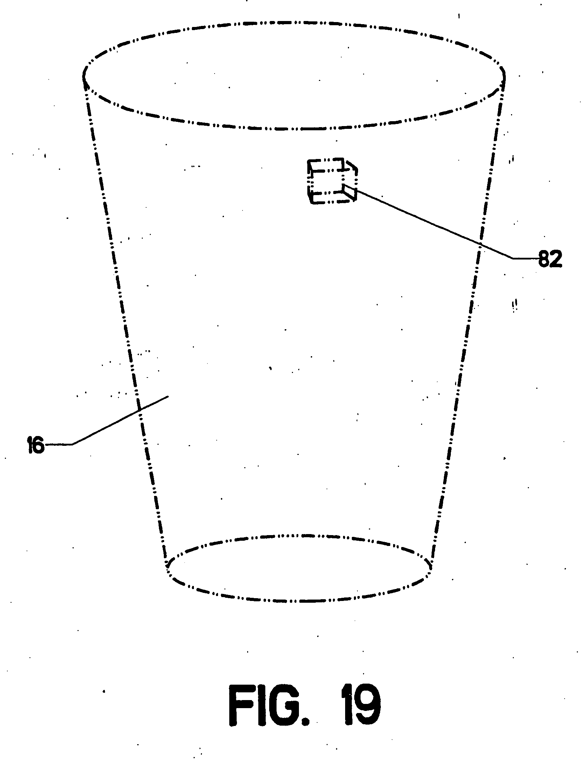

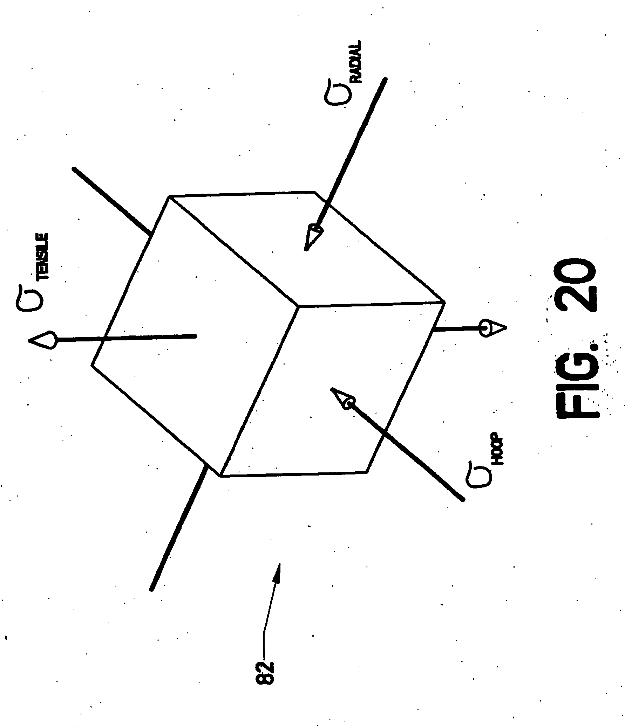

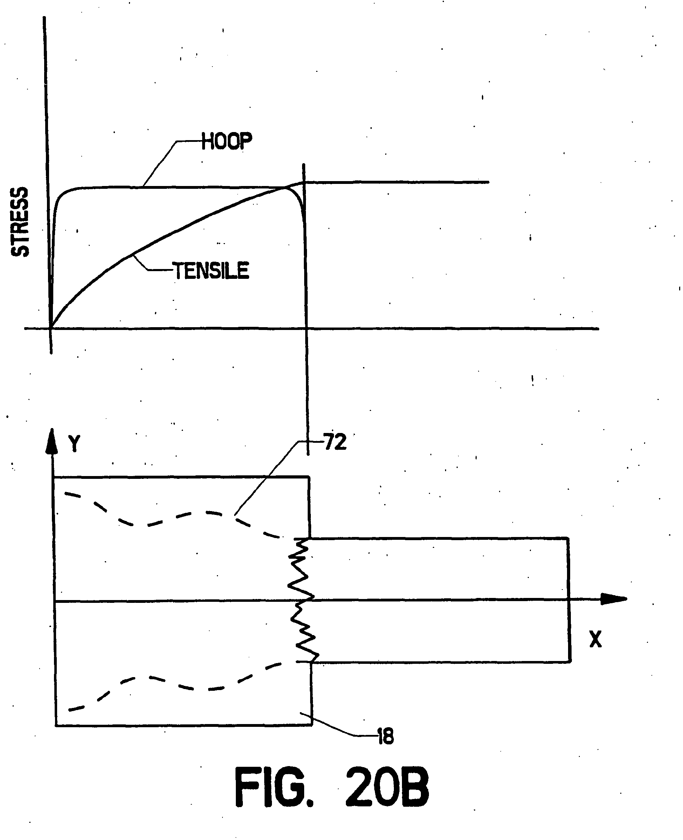

Stress within the potted region is a complex phenomenon having many components. FIG. 19 shows analysis element 82 lying at a point within potted region **16**. Analysis element **82** is a small portion of the potted region defined to facilitate consideration of stress. The creation of such an element will be familiar to those skilled in stress analysis and particularly finite element analysis. FIG. 20 shows the normal stresses placed on analysis element **82.** These perpendicular stresses are referred to as hoop stress, radial stress, and tension stress ($\sigma_{hoop}$, $\sigma_{radial}$, $\sigma_{tension}$), Shear stress components are present as well, though, in most locations within the potted region these shear stresses are smaller than the perpendicular stresses.

Hoop stress is a substantial factor in determining the stress distribution within the potted region. In the case of a conically-shaped potted region (as depicted in FIGS. 1 through 10), the radial stress will be approximately equal to the hoop stress. Of course, the present invention proposes substantially altering the traditional conical shape. However, at the outset of the optimization process, one may safely consider the radial stress to be roughly equal to the hoop stress. Thus, optimizing the wall profile to produce a good hoop stress distribution is an appropriate initial step.

The analysis which was graphically depicted in FIGs. 6 through 9 contains an important implication. In a conical shape (a wall profile which is simply a straight line), hoop stress is greatly concentrated in the neck region. This is true because of the non-linear relationship between the radius of a circle and the area corresponding to that radius. If one doubles the radius of a circle, the area is multiplied fourfold. Conversely, if one halves the radius of a circle, the resulting area will only be one fourth as large. Thus, for a given fixed amount of radial compression, a smaller circle undergoes a greater strain than a larger circle. Since stress is linearly proportional to strain, the smaller circle experiences greater stress. This fact means that the smaller cross sections near the neck region experience greater hoop stress than the larger cross sections near the distal region.

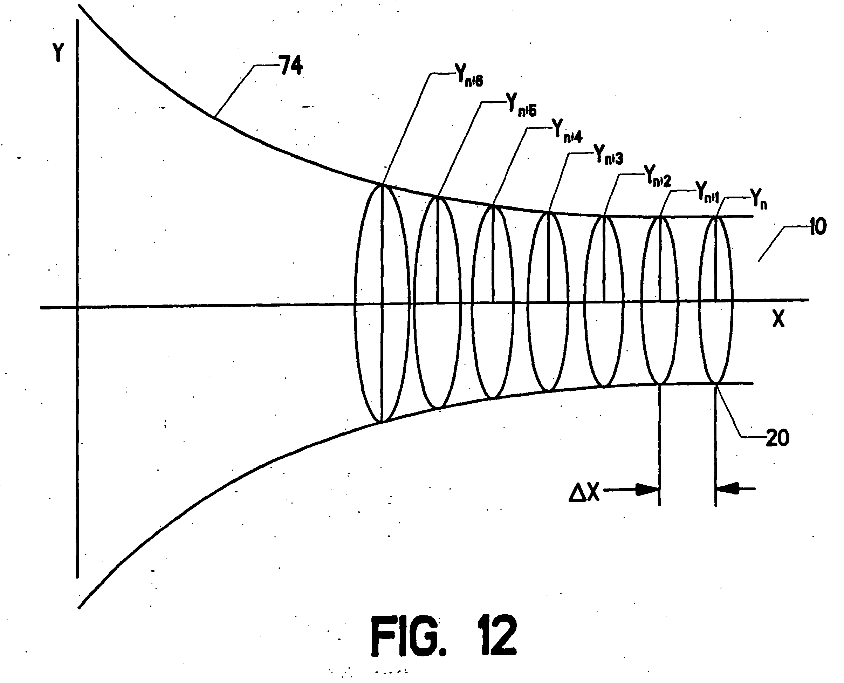

However, an altered wall profile can change this condition. FIG. 12 shows a wall profile plotted with the same coordinate system as defined in FIG. 6. A succession of circular cross sections are depicted. The cross section furthest to the right matches the radius of cable **10**. It has a radius of $Y_n$. Proceeding to the left, a series of additional cross sections are shown having radii $Y_{n+1}$, $Y_{n+2}$, $Y_{n+3}$.... The sections are separated along the X Axis by a uniform distance $\Delta$X. The series of cross sections starts on the right side of the view and progresses toward the left. From a standpoint of mathematics, the starting point is of no great significance. However, as a practical matter, the radius at the neck region should approximately match the radius of the cable. Thus, it makes sense to define the first cross section at the point of interface between the potted region and cable **10,** then work toward the distal region of the anchor. In the context of the orientation shown in FIG. 12, this means defining the first section on the right hand extreme of the anchor and then moving toward the left to generate additional cross sections.

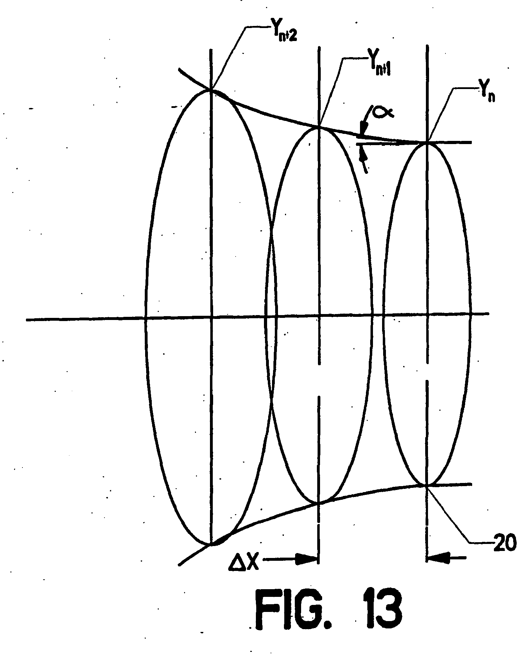

FIG. 13 shows three cross sections in the neck region in greater detail. The wall profile is defined by a succession of area ratios for the cross sections. This will be explained conceptually using the graphics, after which a mathematical formula defining the profile will be explained. Looking at FIG. 13, the radius at $Y_n$ will be equal to the cable radius (the aforementioned practical constraint). An initial slope of a can be arbitrarily defined for the wall at the point of the first section. An arbitrary step distance $\Delta$X along the X Axis can likewise be defined. Using the slope and the step distance, the radius $Y_{n+1}$ can be determined. This defines the next circular cross section.

The step distance $\Delta$X is exaggerated in the view. In actuality it should be much smaller. It is in fact desirable (for analytical purposes) to choose a step distance which is in the range of a typical seating distance. The "seating distance" can be defined as the amount the potted region shifts along the central axis of the anchor's internal passage when the cable is placed under substantial tension. The shift of course results from the potted region being squeezed inward by the wedging effect of the encompassing passage wall.

If $\Delta X$ is set to equal the seating distance, then the reader will recall from the prior explanation that the hoop stress occurring at $Y_n$ can be expressed as:

$$\sigma_{hoop} \approx k_1 \cdot (1 - \frac{Y_n^2}{Y_{n+1}^2})$$

This expression holds for the analysis all along the length of the potted region. In the context of the orientation shown in FIGs. 12 and 13 (where the passage expands when proceeding from right to left), $Y_n$ is the radius of an arbitrarily selected cross section and $Y_{n+1}$ is the radius of a cross section which is a distance $\Delta X$ to the left of the selected cross section.

Since the initial goal is to make the hoop stress uniform, one can readily perceive, from the preceding equation that one must make the term $\frac{Y_n^2}{Y_{n+1}^2}$ uniform from one end of the potted region to the other. Looking at the three sections shown in FIG. 13, this means that the wall profile must be shaped so that $\frac{Y_{n+1}^2}{Y_{n+2}^2} = \frac{Y_n^2}{Y_{n+1}^2}$ (an "area ratio function").

It is convenient to express this area ratio in terms of a constant, $C$, where $C = \frac{Y_{n+1}^2}{Y_n^2}$. This constant $C$ can be referred to as a coefficient of compression. The expression for $C$ can then be used to solve for the radius of each successive cross section using the following algebraic manipulation:

$$Y_{n+1} = \sqrt{C \cdot Y_n^2}$$

The reader will note that the coefficient of compression is related to the initial radius ($Y_n$) and the initial slope, $\alpha$. One can just as easily develop an expression based directly on these two values. However, the use of the coefficient of compression is a simple way to refer to both. A low number for the coefficient of compression means that a relatively small amount of compressive strain is allowed for a given amount of seating movement, whereas a high number means a relatively large amount of compressive strain is allowed for a given amount of seating movement.

Using the equation, a whole series of circular cross sections can be developed. The first six of these are shown in FIG. 12. The progression can be continued to produce many more cross sections. A curve can then be fitted through the tangent point of the circular sections. This curve is denoted as hoop stress optimized curve 74 in FIG. 12.

This curve can be described as an "area-ratio-function." The radii of successive cross sections forming the curve are "adjusted" so that if the potted region is shifted to the right a fixed distance, each cross section will undergo the same percent reduction in its cross-sectional area. Since hoop stress is strongly related to the percent reduction in cross-sectional area, this approach produces a hoop stress optimized curve.

In order to demonstrate the validity of this approach, it may be helpful to consider the stress placed on two sections in the distal region and two sections in the neck region. Consider an anchor sized to fit a cable which is .125 inches in diameter. The radially symmetric anchor has a length of .500 inches along its centerline. The radius at potting transition 20 is set to .125 (the same as the cable radius). The coefficient of compression is set to 1.03. The value for $\Delta X$ is set to .005. A series of values for $X$ and $Y$ can the be developed over the length of the anchor (which extends from $X$=0 to $X$=.500), using the area ratio function. A series of values for the hoop stress on the section can also be computed using the preceding equations. Note that the number presented for the hoop stress is presented with the constant divided out. The values for two sections in the neck region and two section in the distal region are presented in the following table:

| $X$ | $Y$ | $\frac{Y_{n+1}^2}{Y_n^2}$ | $\sigma_{hoop}/k_1$ |
|---|---|---|---|
| .005 | .269974 | 1.03 | .029126 |
| .010 | .266014 | 1.03 | .029126 |
| .495 | .063431 | 1.03 | .029126 |

(continued)

| $X$ | $Y$ | $\dfrac{Y_{n+1}{}^2}{Y_n{}^2}$ | $\sigma_{hoop}/k_1$ |
|-----|-----|------|------|
| .500 | .0625 | 1.03 | .029126 |

The reader will note that the value for the hoop stress remains constant. Thus, the use of the constant area ratio to develop a wall profile serves to create uniform hoop stress from the neck region of the potted region to the distal region.

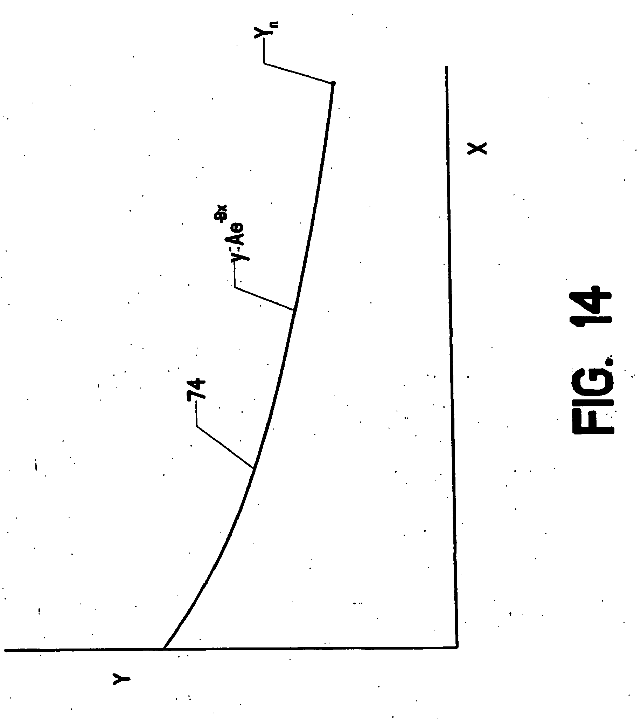

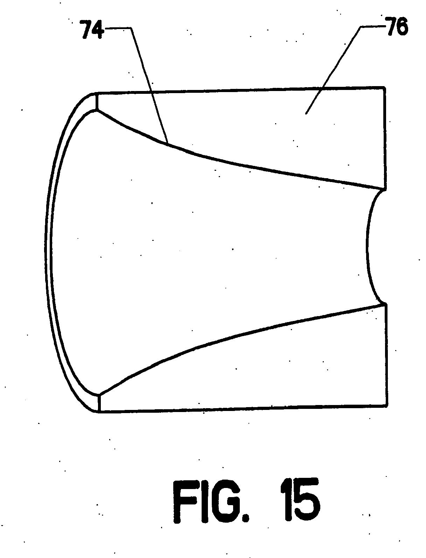

FIG. 14 shows a plot of hoop stress optimized curve **74.** FIG. 15 shows this curve used as a wall profile revolved around the center line of an anchor. The revolved wall profile defines the shape of the internal passage through the anchor. Thus, the anchor is referred to as hoop stress optimized anchor **76.**

Those familiar with the mathematics of the area ratio function will realize that the curve shown in FIG. 14 can be expressed as $y = Ae^{-Bx}$, where $A$ and $B$ are constants. This is a function traditionally known as a natural logarithm, with the use of a negative exponent indicating a natural logarithmic "decay" function.

Those familiar with the art will also realize that starting at the point $Y_n$, an infinite variety of hoop stress optimized curves can be created by varying the constants $A$ and $B$. Using the nomenclature of the coefficient of compression (C), an infinite number of curves can likewise be created by varying that single number. All of these curves may be said to be "hoop stress optimized." However, curves having a high rate of expansion are unsuitable since they will not define a cavity which can fit within a reasonably sized anchor. Likewise, a curve having very little expansion will not secure the potted region within the cavity. It will simply pull through. Thus, the coefficient of compression should be selected to produce a curve of moderate expansion.

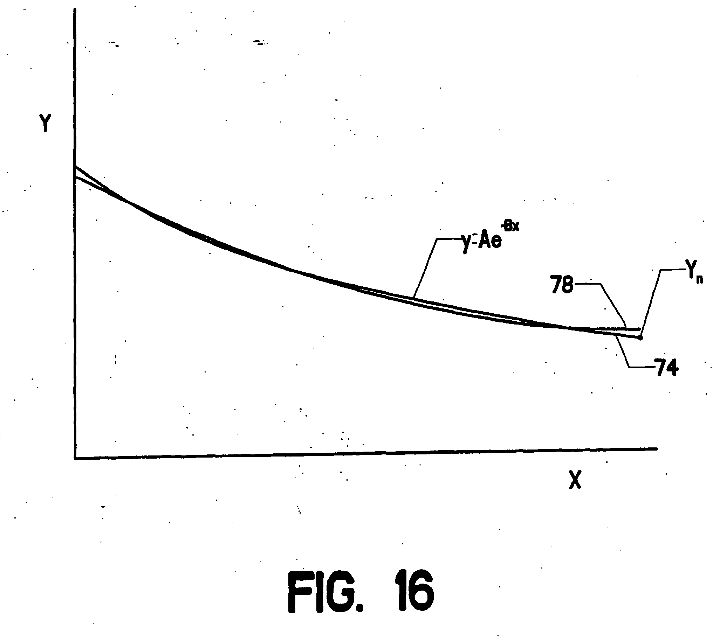

From the definition of the area ratio function (the natural logarithm equation), the reader will understand that the hoop stress optimized curve is not a second order - or parabolic - curve. FIG. 16 illustrates this fact graphically. Hoop stress optimized curve **74** is plotted as for FIG. 14. parabolic approximation **78** is a least-squares fitting of a parabolic, curve (second order curve). As the reader can observe, the parabolic curve is a relatively poor fit.

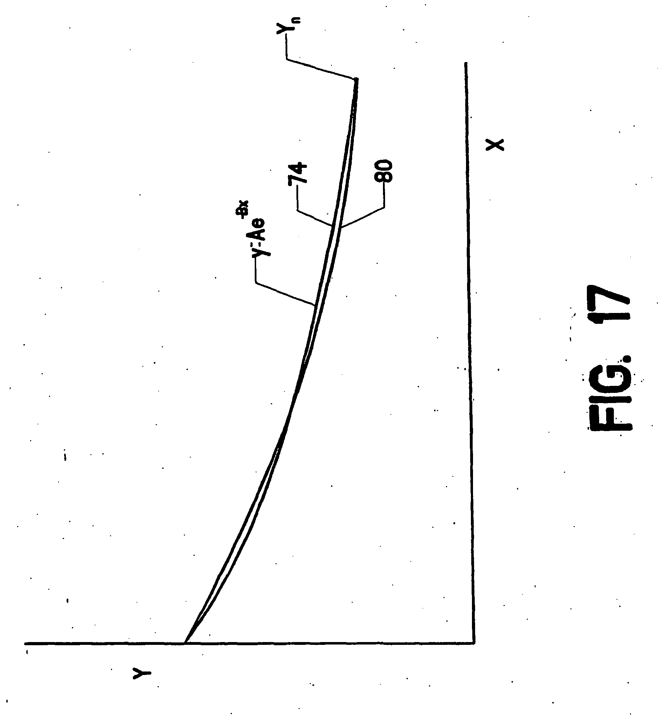

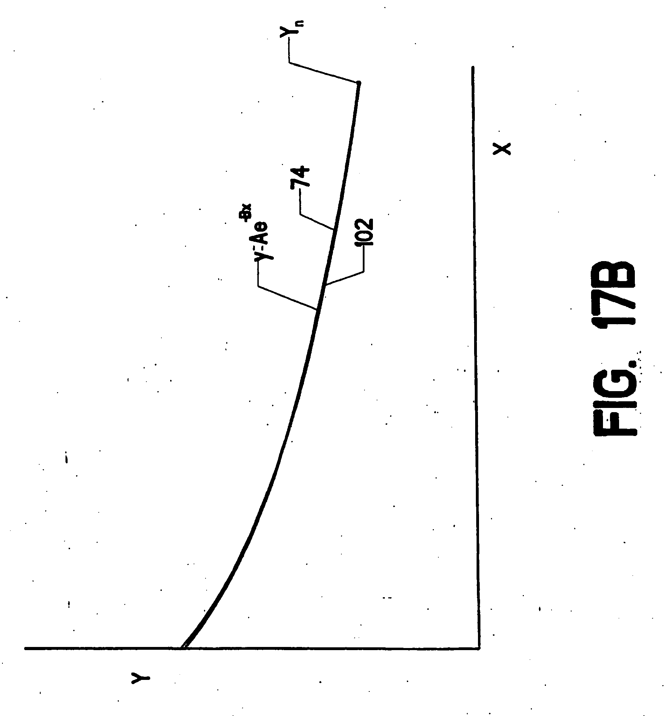

The same can be said for constant radius curves. FIG. 17 represents an attempt to fit constant radius curve 80 (a simple arc) to hoop stress optimized curve **74.** Again, the error is significant. Clearly, the hoop stress optimized curve cannot be accurately approximated using a constant radius arc.

On the other hand, a third-order curve can provide a good fit. This expression assumes the form $y = A \cdot x^3 + B \cdot x^2 + D \cdot x + E$, where $A, B, D$, and $E$ are constants ($C$ is not used to represent a constant in this expression since $C$ has already been used to denote the coefficient of compression). FIG., 17B graphically depicts a least-squares fit of third order curve **102** over hoop stress optimized curve **74.** A good fit is obtained. Thus, a third order curve with appropriate coefficients can produce an excellent hoop stress optimized curve.

Returning to the triaxial stress element depicted in FIG. 20, however, the reader will recall that hoop stress is only one component of the normal stresses placed on analysis element 82. Tensile and radial stresses must be considered as well. For compression of a roughly conical shape, the radial stress at most points will be roughly equal to the hoop stress. Thus, a wall profile which produces a desired distribution for hoop stress works for radial stress as well. Those skilled in the art will know, however, that the tensile stress is not easily related to the hoop stress.

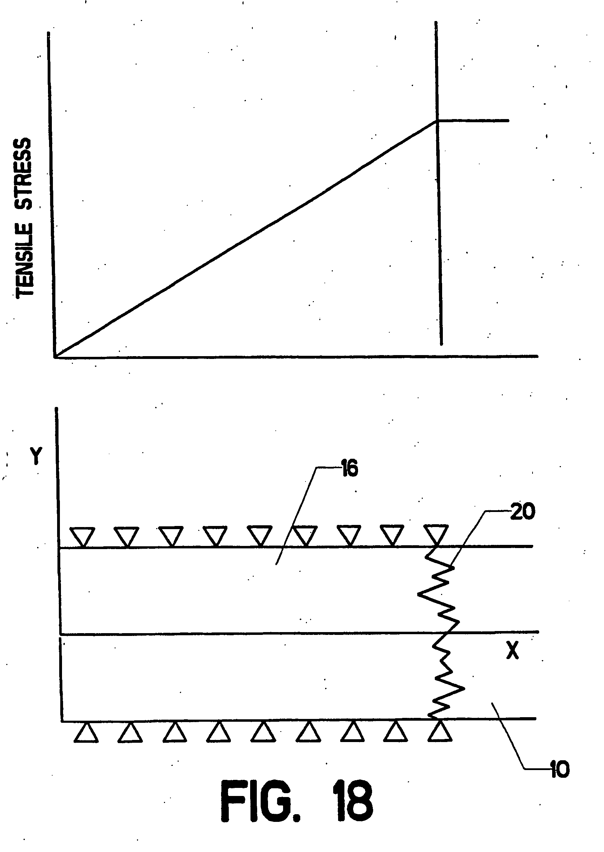

FIG. 18 graphically depicts the distribution of tensile stress within the potted region. A very simple shape is used for the potted region (a pure cylinder). The evenly distributed triangles represent an even distribution of forces holding the potted region in place. If tension is placed on the cable, then the tension throughout the freely flexing portion of the cable will be fairly uniform. The tensile stress distribution within this potted region is plotted in the upper portion of the view. The tensile stress linearly increases from zero at the distal extreme of the potted region to the stress found within the cable at potting transition **20.**

The magnitude of this tensile stress is significant with respect to the hoop stress. Varying the wall profile will of course vary the tensile stress curve depicted. However, one can always say that the maximum tensile stress will occur in the neck region. The hoop stress optimized wall profile does nothing to alter this phenomenon. Thus, a wall profile which is optimized only for hoop stress can be further improved.

Returning to the analysis element of FIGs. 19 and 20, the reader will recall that three orthogonal normal stresses are placed on the element. One theory useful for analyzing stress in fairly ductile materials is the *von Mises-Hencky theory,* also known as the distortion-energy theory. A discussion of this theory is beyond the scope of this disclosure, but those knowledgeable in the field of mechanical engineering will fully understand the term *von Mises stress,* which is a computed stress value which considers all three orthogonal normal stresses. The expression for the *von Mises stress* is as follows:

$$\sigma' = \sqrt{\frac{(\sigma_{hoop} - \sigma_{radial})^2 + (\sigma_{radial} - \sigma_{tension})^2 + (\sigma_{tension} - \sigma_{hoop})^2}{2}}$$

Because in the case of the potted region the hoop stress and the radial stress are roughly equal, this expression can be simplified to the following without introducing significant error:

$$\sigma' \approx \sqrt{\frac{(\sigma_{hoop} - \sigma_{tension})^2 + (\sigma_{tension} - \sigma_{hoop})^2}{2}}$$

In the case depicted in FIGs. 19 and 20 - and indeed for all similarly shaped potted regions - the sign of the hoop stress will be opposite that of the tensile stress. In other words, the hoop stress will be in compression and the tensile stress will be in tension. This allows the *von Mises stress* expression to be further simplified to the following:

$$\sigma' = \sqrt{\frac{2 \cdot (|\sigma_{hoop}| + |\sigma_{tension}|)^2}{2}} \approx |\sigma_{hoop}| + |\sigma_{tension}|$$

The reader should bear in mind that this equation is a rough approximation. It will not give exact results. But, since experimentation will be required to select the correct wall profile from the many possible optimized wall profiles, a rough approximation which narrows the selection process substantially is quite useful.

The *von Mises stress* value represents a good approximation of the total stress existing at any point within the potted region. The expression for roughly approximating the *von Mises stress* suggests an obvious conclusion: The wall profile which is optimized for hoop stress is not well optimized for *von Mises stress* because it does not account for tensile stress. A modification to the hoop stress optimized wall profile must be made to account for tensile stress.

FIG. 20B illustrates this process graphically. The optimized hoop stress curve is shown as approximately flat. This means that the hoop stress is uniform from the distal region through to the neck region. As stated previously, this result is not perfectly achievable in an actual termination. It represents a goal.

The tensile, stress is shown on the plot as well. The reader will note that the plotted tensile stress is not linear in this example. The linear plot shown for tensile stress in FIG. 18 is a simplest-case scenario. The actual tensile stress distribution looks more like the one shown in FIG. 20B. The "philosophy" of compensating for tensile stress can now be explained. One can alter the optimized hoop stress distribution so that the *sum* of the hoop stress and the tensile stress produces a flat curve (as opposed to simply having the hoop stress produce a flat curve). More hoop stress can be allowed in the distal region, since little tensile stress is present in that region. Less hoop stress should be allowed in the neck region since the tensile stress is greatest there. Thus, the goal is to modify the optimized hoop stress curve to produce this result.

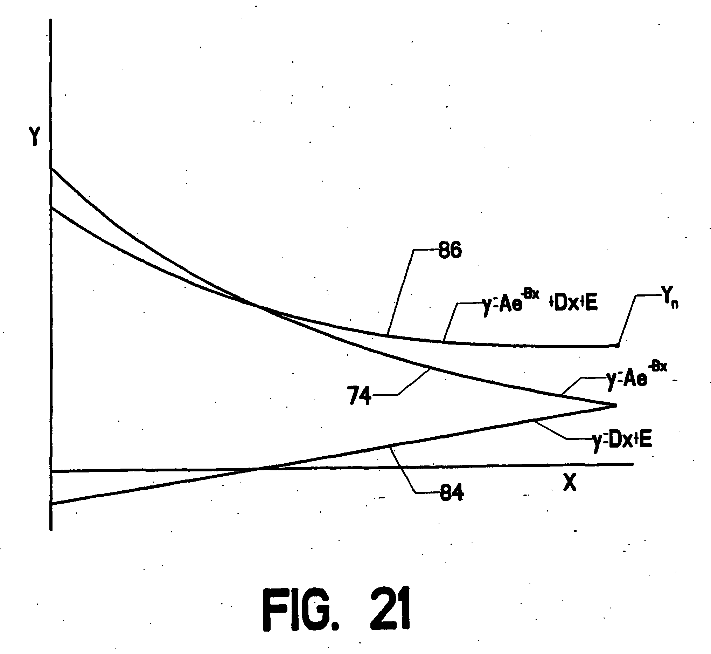

FIG. 21 shows a plot of optimized wall profiles (rather than a stress plot) configured to produce an optimized profile for *von Mises stress.* Hoop stress optimized curve **74** is created as before. A second curve - denoted as tensile stress modifier curve **84 -** is added. This second curve is designed to be added to the hoop stress optimized curve to create composite curve **86.** In other words, composite curve **86** is simply the sum of the other two curves. Composite curve **86** is revolved around the central axis of the anchor's internal passage (corresponding to the X Axis in the view) in order to create a radially symmetric passage. Many wall profiles are shown in the drawing view to follow. The reader will understand that all these profiles will be revolved to create an anchor passage.

The reader will note that this very simple version of the tensile stress modifier curve achieves the objectives stated for the *von Mises stress* optimization; i.e., it adds slope to the composite curve in the distal region where extra hoop stress can be tolerated and subtracts slope in the neck region where hoop stress must be reduced.

The hoop stress optimized curve takes the form $y = f_1(x)$, where $f_1(x)$ is based on the area ratio functions described in detail previously. The tensile stress modifier curve takes the form $y = f_2(x)$. This second expression can be a linear function, a second order function, or a higher order function. Thus, the composite curve can be generally expressed as:

$$y = (drea - ratio - function) + f_2(x)$$

If the modifier curve is a simple linear function, then the composite curve can be expresses as:

$$y = A \cdot e^{-Bx} + D \cdot x + E$$

Various mathematical functions can be used to approximate this function. These will be described in detail. First, however, it is useful to consider certain practical limitations which restrict the selection of the functions.

In FIG. 21, the point $Y_n$ represents the radius at the anchor's neck (the point where the freely flexing cable exits the anchor). The radius at this point should be equal to or slightly larger than the radius of the cable. Thus, the hoop stress optimized curve and the tensile stress modifier curve should be selected so that their sum will produce a radius of $Y_n$ at the point $X_n$.

The slope at the point $(X_n, Y_n)$ is also important. The wall profile should be tangent or very nearly tangent to the cable at this point. Thus, in the context of the orientation shown in the view, the first derivative of composite curve 86 should be nearly zero at the point $(X_n, Y_n)$.

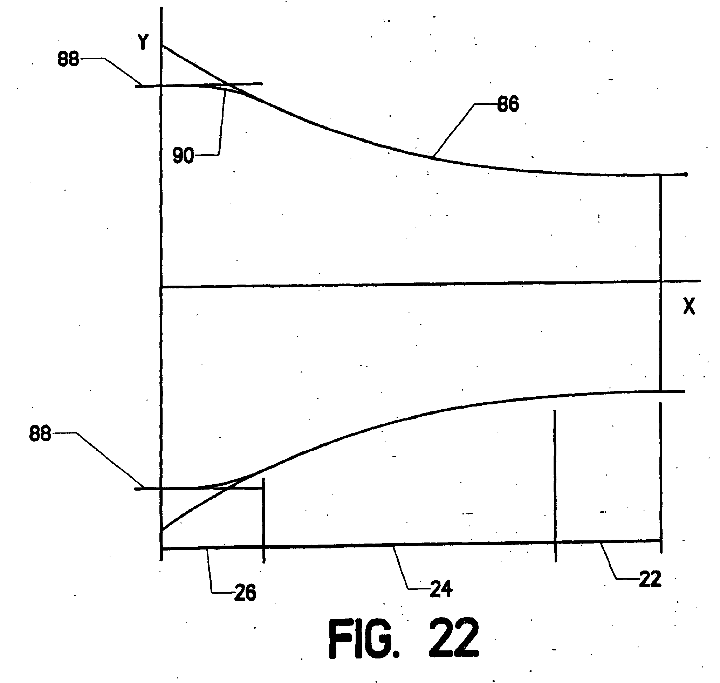

Another practical limitation is that the wall profile must physically fit within the body of the anchor. FIG. 22 shows a plot of composite curve **86** spanning, neck region **22,** mid region **24,** and distal region **26.** The curve must generally be optimized for the total stress existing in the neck and mid regions. The stress within the distal region is typically not so important, since the low tensile stress in this region means that the total stress will be relatively low. By the same token, if the composite curve is carried through this region without modification it will produce fairly large diameters (depending on the particular composite curve selected). This fact will require the use of a large diameter anchor body.

Thus, at some point it may be desirable to discontinue the composite curve and carry a less rapidly expanding shape out to the distal end of the anchor. FIG. 22 shows the use of a simple cylindrical wall for this purpose. Diameter boundary **88** intersects the composite curve for this purpose. A fillet **90** can be added between composite curve **86** and diameter boundary 88 in order to smooth this transition.

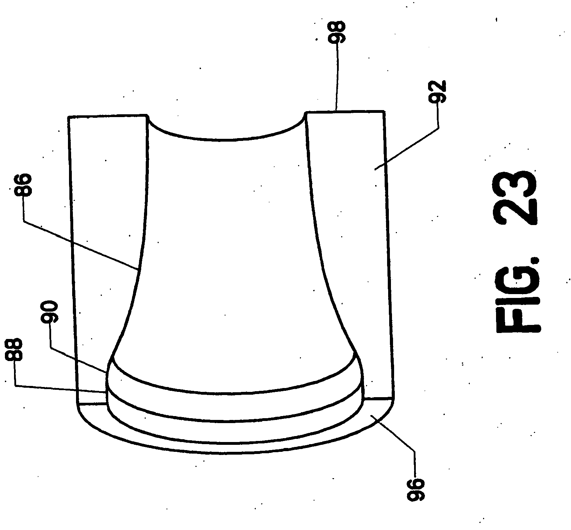

FIG. 23 is a section view through an anchor made using this approach. The reader will observe that the wall profile of the internal passage is formed by composite curve **86,** diameter boundary **88,** and a fillet between the two. The anchor is optimized for an even distribution of *von Mises stress.*

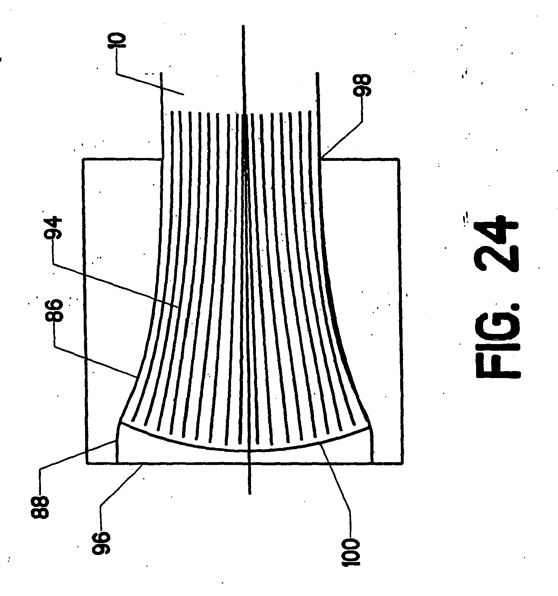

FIG. 24 is a sectioned elevation view of the same anchor with cable strands placed within the internal passage. The strands on one end of cable **10** are splayed (displaced radially outward) to form splayed strands 94. The splayed strands form dome shape **100** on their distal end. Once the liquid potting compound hardens to form the potted region, the area within the anchor's internal passage to the right of dome shape **100** will be a composite structure including solidified potting compound and cable strands. The area to the left of dome shape **100** will be solidified potting compound with no strand reinforcement. This unreinforced area is relatively weak. Thus, the region to the left of dome shape 100 in the view cannot significantly contribute to force transmission between the cable and the anchor. It therefore makes sense to discontinue the composite curve around this point and carry diameter boundary **88** out to distal anchor boundary **96.**

The length of diameter boundary **88** will vary. In some embodiments dome shape **100** will actually lie on distal anchor boundary **96.** For those embodiments, the unreinforced region will be small. However, a diameter boundary may nevertheless be useful, since the elimination of the rapidly expanding region of the composite curve allows the use of a smaller overall diameter for the anchor. In some instances it may be desirable not to carry the composite curve all the way to neck anchor boundary **98** as well. If the composite curve is stopped short of the neck anchor boundary, then a cylindrical cotangent section can be used to bridge the composite curve to the neck anchor boundary.

The reader should bear in mind that the mathematics used to create the optimization are not highly accurate. The potted region is an anisotropic composite, meaning that its mechanical properties differ according to orientation of the analytical plane (much like the grain in a piece of wood). This is obviously true since the reinforcing cable strands run primarily in one direction. Thus, the techniques disclosed provide helpful guidance as to the type of profile needed. The actual coefficients used in the profile must often be determined experimentally.

EXAMPLES OF OPTIMIZED COMPOSITE CURVES

As stated previously, the general expression for the composite curve is the sum of an area ration function plus $f_2(x)$. The area ratio function can be expressed as a natural logarithm. The function $f_2(x)$ can assume many forms. FIG.

25 shows a linear version of tensile stress modifier curve 84, assuming the form:

$$y = D \cdot x + E$$

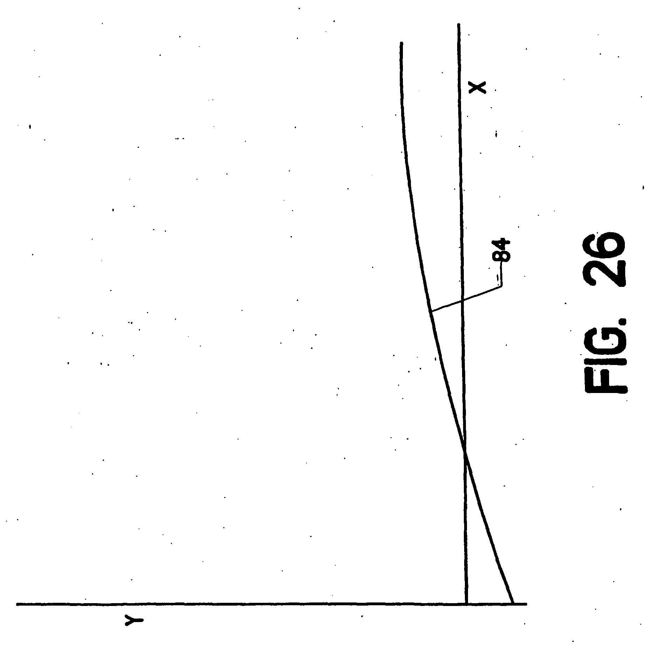

FIG. 26 shows the use of an arcuate segment to more closely approximate the actual distribution of tensile stress within the potted region. This curve assumes the form: $(x-x_0)^2 + (y-y_0)^2 = r^2$, where the two constants are offsets for the center of the arc and r is the radius of the arc. This expression can be algebraically rewritten as:

$$y = y_0 + \sqrt{r^2 - (x - x_0)^2}$$

Of course, second and higher order polynomials can be used to create suitable tensile stress modifier curves as well. The simpler versions would assume the form:

$$x = A \cdot y^2 + B \cdot y + D \text{ , or } x = A \cdot y^3 + B \cdot y^2 + D \cdot y + E$$

If these equations are to be expressed in terms of $y=f(x)$, then they would be expressed in terms of logarithms and natural logarithms. All these functions are known to those skilled in the art of mathematics. More detailed explanations of other possibilities will therefore be omitted.
Since the composite curve is the sum of the area ratio curve plus the tensile stress modifier curve, examples of the function for the composite curve are as follows:

$$y = (A \cdot e^{-Bx}) + (D \cdot x + E)$$

$$y = (A \cdot e^{-Bx}) + (y_0 + \sqrt{r^2 - (x - x_0)^2})$$

Many combinations of these area curve and tensile stress modifier curves are possible. These equations should be viewed as examples only.

**Claims**

**1.** An anchor for use in creating a termination on a cable, comprising:

   a. a neck anchor boundary (98);
   b. a distal anchor boundary (96);
   c. a central axis X;
   d. a passage (28) extending along said central axis from said neck anchor boundary (98) to said distal anchor boundary (96);
   e. wherein said passage is defined by a revolved wall profile (86);
   f. **characterized in that** said wall profile (86) is created by adding a first set of radius values produced by a first curve (74) and a second set of radius values produced by a second curve (84) to form a third set of radius values defining a composite curve (86);
   g. wherein at each point along said central axis said composite curve (86) has a slope, with a positive slope being defined as one which causes said passage (28) to expand when proceeding in the direction from said neck anchor boundary (98) to said distal anchor boundary (96);
   h. wherein said first curve (74) is an area ratio function having a positive slope proximate said neck anchor boundary (98) and having an increasingly positive slope proceeding toward said distal anchor boundary (96);

i. wherein said second curve (84) is a tensile stress modifier curve having a negative slope proximate said neck anchor boundary (98) and having a negative slope for substantially all its length; and

j. wherein parameters defining said area ratio function and said tensile stress modifier curve (86) are selected so that at said neck anchor boundary (98) said radius of said composite curve (86) is approximately equal to the radius of said cable and said slope of said composite curve (86) is approximately zero.

2. An anchor as recited in claim 1, wherein said passage (28) further comprises a portion having a fixed diameter, with said fixed diameter portion comprising the portion of said passage (28) which extends to said distal anchor boundary (98).

3. An anchor as recited in claim 2, wherein said fixed diameter portion (88) and said composite curve (86) are joined by a fillet (90).

4. An anchor as recited in claim 1, wherein at said neck anchor boundary (98) said radius value produced by said area ratio function is approximately equal to said radius value produced by said tensile stress modifier curve (84).

5. An anchor as recited in claim 4, wherein in a region of said passage (28) lying approximately midway between said neck anchor boundary (98) and said distal anchor boundary (96), said radius value produced by said area ratio function is substantially larger than said radius value produced by said tensile stress modifier curve (84).

6. An anchor as recited in claim 5, wherein said fixed diameter portion (88) and said composite curve (86) are joined by a fillet (90).

7. An anchor as recited in any one of claims 1 to 6, wherein at the extreme of said composite curve lying closest to said distal anchor boundary, said radius value produced by said tensile stress modifier curve is negative.

**Patentansprüche**

1. Anker zur Herstellung eines Kabelabschlusses, umfassend:

   a. eine halsseitige Ankergrenze (98);
   b. eine distale Ankergrenze (96);
   c. eine Mittelachse X;
   d. einen Durchgang (28), der entlang der Mittelachse von der halsseitigen Ankergrenze (98) zur distalen Ankergrenze (96) verläuft;
   e. wobei der Durchgang durch ein gedrehtes Wandprofil (86) definiert ist;
   f. **dadurch gekennzeichnet, dass** das Wandprofil (86) durch Zusammenfügung einer ersten Menge Radiuswerte einer ersten Kurve (74) und einer zweiter Menge Radiuswerte einer zweiten Kurve (84) gebildet wird, so dass eine dritte Menge Radiuswerte entsteht, die eine zusammengesetzte Kurve definieren (86);
   g. wobei die zusammengesetzte Kurve (86) an jedem Punkt entlang der Mittelachse eine Steigung besitzt, wobei unter einer positiven Steigung eine Steigung zu verstehen ist, die eine Aufweitung des Durchgangs (28) von der halsseitigen Ankergrenze (98) zur distalen Ankergrenze (96) hin bewirkt;
   h. wobei die erste Kurve (74) eine Flächenverhältnis-Funktion darstellt, die in der Nähe der halsseitigen Ankergrenze (98) eine positive Steigung aufweist, die in Richtung auf die distale Ankergrenze (96) hin zunehmend stärker positiv wird;
   i. wobei die zweite Kurve (84) eine Zugspannungs-Modifikationskurve darstellt, die in der Nähe der halsseitigen Ankergrenze (98) eine negative Steigung aufweist und im Wesentlichen über ihre gesamte Länge ebenfalls eine negative Steigung aufweist; und
   j. wobei die die Flächenverhältnis-Funktion und die Zugspannungs-Modifikationskurve (86) definierenden Parameter so gewählt sind, dass an der halsseitigen Ankergrenze (98) der Radius der zusammengesetzten Kurve (86) etwa gleich dem Radius des Kabels und die Steigung der zusammengesetzten Kurve (86) etwa gleich Null ist.

2. Anker gemäß Anspruch 1, wobei der Durchgang (28) zudem einen Teil mit festem Durchmesser umfasst, wobei dieser Teil mit festem Durchmesser den zur distalen Ankergrenze (98) hin verlaufenden Teil des Durchgangs (28) umfasst.

3. Anker gemäß Anspruch 2, wobei der Teil mit festem Durchmesser (88) und die zusammengesetzte Kurve (86) durch eine Abrundung (90) verbunden sind.

4. Anker gemäß Anspruch 1, wobei an der halsseitigen Ankergrenze (98) der von der Flächenverhältnis-Funktion erzeugte Radiuswert etwa gleich dem von der Zugspannungs-Modifikationskurve (84) erzeugten Radiuswert ist.

5. Anker gemäß Anspruch 4, wobei in einem Bereich des Durchgangs (28), welcher etwa auf halber Strecke zwischen der halsseitigen Ankergrenze (98) und der distalen Ankergrenze (96) liegt, der von der Flächenverhältnis-Funktion erzeugte Radiuswert wesentlich größer ist als der von der Zugspannungs-Modifikationskurve (84) erzeugte Radiuswert.

6. Anker gemäß Anspruch 5, wobei der Teil mit festem Durchmesser (88) und die zusammengesetzte Kurve (86) durch eine Abrundung (90) verbunden sind.

7. Anker gemäß einem der Ansprüche 1 bis 6, wobei an dem der distalen Ankergrenze am nächsten gelegenen äußersten Ende der zusammengesetzten Kurve der von der Zugspannungs-Modifikationskurve erzeugte Radiuswert negativ ist.

**Revendications**

1. Ancrage utilisé pour créer une terminaison de câble, comprenant :

   a. une limite d'ancrage de col (98) ;
   b. une limite d'ancrage distale (96) ;
   c. un axe central X ;
   d. un passage (28) s'étendant le long dudit axe central, de ladite limite d'ancrage de col (98) à ladite limite d'ancrage distale (96) ;
   e. dans lequel ledit passage est défini par un profil de paroi rabattue (86) ;
   f. **caractérisé en ce que** ledit profil de paroi (86) est créé en additionnant un premier jeu de valeurs de rayon produit par une première courbe (74) et un deuxième jeu de valeurs de rayon produit par une deuxième courbe (84) pour former un troisième jeu de valeurs de rayon définissant une courbe composite (46) ;
   g. dans lequel à chaque point le long dudit axe central ladite courbe composite (86) a une inclinaison, une inclinaison positive étant définie comme une inclinaison qui conduit ledit passage (28) à s'accroître dans la direction allant de la limite d'ancrage de col (98) à la limite d'ancrage distale (96) ;
   h. dans lequel ladite première courbe (74) est une fonction d'un rapport de superficie ayant une inclinaison positive à proximité de ladite limite d'ancrage de col (98) et ayant une inclinaison de plus en plus positive au fur et à mesure qu'elle avance vers ladite limite d'ancrage distale (96) ;
   i. Dans lequel ladite deuxième courbe (84) est une courbe modifiant les contraintes en tension ayant une inclinaison négative à proximité de ladite limite d'ancrage de col (98) et ayant une inclinaison négative sur sensiblement toute sa longueur ; et
   j. Dans lequel les paramètres définissant ladite fonction de rapport de superficie et ladite courbe de modification des contraintes en tension (86) sont sélectionnés de telle manière qu'à ladite limite d'ancrage de col (98) ledit rayon de ladite courbe composite (86) est approximativement égal au rayon dudit câble et ladite inclinaison de ladite courbe composite (86) est approximativement zéro.

2. Ancrage selon la revendication 1, dans lequel ledit passage (28) comprend en outre une partie ayant un diamètre fixe, ladite partie à diamètre fixe comprenant la partie dudit passage (28) qui s'étend jusqu'à ladite limite d'ancrage distale (98).

3. Ancrage selon la revendication 2, dans lequel ladite partie à diamètre fixe (88) et ladite courbe composite (86) sont jointes par un congé (90).

4. Ancrage selon la revendication 1, dans lequel a ladite limite d'ancrage de col (98) ladite valeur de rayon produite par ladite fonction de rapport de superficie est approximativement égale à ladite valeur de rayon produite par ladite courbe de modification de contraintes en tension (84).

5. Ancrage selon la revendication 4, dans lequel dans une région dudit passage (28) couchée approximativement à mi-chemin entre ladite limite d'ancrage de col (98) et ladite limite d'ancrage distale (96), ladite valeur de rayon produite par ladite fonction de rapport de superficie est sensiblement plus grande que ladite valeur de rayon produite par ladite courbe de modification de contraintes en tension (84).

6. Ancrage selon la revendication 5, dans lequel ladite partie à diamètre fixe (88) et ladite courbe composite (86) sont jointes par un congé (90).

7. Ancrage selon l'une quelconque des revendications 1 à 6, dans lequel à l'extrême de ladite courbe composite couchée le plus près de ladite limite d'ancrage distale, ladite valeur de rayon produite par ladite courbe de modification de contraintes en tension est négative.

16

18

14

10

# FIG. 1

(PRIOR ART)

FIG. 2
(PRIOR ART)

FIG. 3
(PRIOR ART)

EP 1 561 965 B1

# FIG. 4

(PRIOR ART)

**FIG. 5**

(PRIOR ART)

EP 1 561 965 B1

FIG. 6

(PRIOR ART)

EP 1 561 965 B1

FIG. 7
(PRIOR ART)

EP 1 561 965 B1

**FIG. 8**

(PRIOR ART)

EP 1 561 965 B1

FIG. 9

(PRIOR ART)

EP 1 561 965 B1

FIG. 10
(PRIOR ART)

FIG. 11

FIG. 12

FIG. 13

FIG. 14

EP 1 561 965 B1

FIG. 15

$$y = Ae^{-Bx}$$

FIG. 16

EP 1 561 965 B1

FIG. 17

EP 1 561 965 B1

Y

$y = Ae^{-Bx}$

74

102

$Y_n$

X

FIG. 17B

FIG. 18

FIG. 19

FIG. 20

FIG. 20B

FIG. 21

FIG. 22

**FIG. 23**

**FIG. 24**

EP 1 561 965 B1

EP 1 561 965 B1

FIG. 25

FIG. 26

EP 1 561 965 B1

**EP 1 561 965 B1**

**Patent documents cited in the description**

- DE 2122463